# EUROPÄISCHE PATENTANMELDUNG

(11) **EP 2 639 336 A1**
(43) Veröffentlichungstag der Anmeldung: **18.09.2013**
(21) Anmeldenummer: 12159894.0
(22) Anmeldetag: 16.03.2012
(51) Int. Cl.: C23C 28/00, C23C 28/02

(54) **Schichtsystem mit NiCoCrAlY-Doppelschutzschicht mit unterschiedlichem Chromgehalt und Legierung**

(71) Anmelder: Siemens Aktiengesellschaft, 80333 München (DE)
(72) Erfinder: Stamm, Werner, 45481 Mülheim an der Ruhr (DE)

(57) **Zusammenfassung**

Durch die Verwendung einer zweilagigen NiCoCrAlY-Schicht kann die Bildung von Rissen in der thermisch gewachsenen Oxidschicht, wie sie aufgrund der Schutzwirkung der NiCoCrAlY-Schichten sich bildet, verringert werden.

## Beschreibung

Die Erfindung betrifft ein Schichtsystem, das eine zweilagige NiCoCrAlY-Schicht aufweist, bei dem die Rissanfälligkeit in der thermisch gewachsenen Oxidschicht (TGO) verringert wird und eine Legierung dafür.

Im Heißgaspfad von Gasturbinen werden Nickel- und Kobalt-Basiswerkstoffe verwendet. Diese Werkstoffe weisen jedoch wegen ihrer Optimierung auf höchstmögliche Festigkeit häufig keine genügende Oxidations- und Hochtemperaturkorrosions-Beständigkeit im Heißgas auf. Die Werkstoffe müssen daher mit geeigneten Schutzbeschichtungen vor dem Heißgasangriff geschützt werden. Zur Steigerung der Turbineneintrittstemperatur wird außerdem auf thermisch höchst beanspruchte Komponenten zusätzlich noch eine keramische Schicht auf der Basis Zirkonoxid zur Wärmedämmung aufgebracht. Zur Realisierung möglichst hoher Betriebstemperaturen und langer Lebensdauer der mit Heißgas beaufschlagten Komponenten bedarf es eines optimal abgestimmten Schutzschichtsystems bestehend aus Haftschicht und Wärmedämmschicht. Die Zusammensetzung der Haftschicht hat dabei eine zentrale Bedeutung.

Zur Lösung dieses Problems werden Schutzschichten auf die heißesten Komponenten zum Teil auch als Haftschicht für eine Wärmedämmschicht aufgebracht. Diese bestehen in der Regel aus so genannten NiCoCrAlY-Auflageschichten, die neben Nickel und/oder Kobalt noch Chrom, Aluminium, Silizium, Rhenium, Tantal und Seltene Erden wie Yttrium, Hafnium u. a enthalten können. Jedoch kann es bei weiter steigenden Oberflächentemperaturen an der Schutzschicht zu Schädigungen kommen, die zum Versagen der Schicht oder zum Abplatzen der Wärmedämmschicht führen. Oft wurde Rhenium verwendet.

Rhenium hat jedoch den Nachteil, dass durch dessen Anteil die Kosten deutlich gesteigert werden. Dies wurde in den letzten Jahren besonders bedeutsam und wird auch künftig eine große Rolle spielen.

Bei steigenden Temperaturen der Schichtoberfläche oder für längere Standzeiten der Schutzschichten sind geeignete Schutzschichten zu entwickeln, die unter diesen Randbedingungen eine verbesserte Oxidationsbeständigkeit, verbunden mit einer genügend guten thermomechanischen Beständigkeit bei gleichzeitig niedrigeren Kosten als rheniumhaltige Schichten, besitzen. Dies kann nur durch eine sehr ausgewogene chemische Zusammensetzung der Schutzschicht erzielt werden. Insbesondere sind hier die Elemente Ni, Co, Cr, Al, Y von Bedeutung.

Da diese Elemente infolge von Diffusion auch in Wechselwirkung mit dem Grundwerkstoff stehen, ist dies ebenfalls stark zu berücksichtigen.

Es ist daher Aufgabe der Erfindung oben genanntes Problem zu lösen.

Die Aufgabe wird gelöst durch ein Schichtsystem gemäß Anspruch 1 und eine Legierung gemäß Anspruch 14.

In den Unteransprüchen sind weitere vorteilhafte Maßnahmen aufgelistet, die beliebig miteinander kombiniert werden können, um weitere Vorteile zur erzielen.

Die Beschreibung und die Figuren stellen nur Ausführungsbeispiele der Erfindung dar.

Allgemein wird davon ausgegangen, dass wegen der relativ starken Interdiffusion von Chrom aus der Schicht in den Grundwerkstoff, der in der Regel geringere Chromgehalt als die Schicht aufweist, die Differenz zwischen den Chromgehalten in der Schicht und dem Grundwerkstoff nicht größer als ca. 5% sein sollte. Anderenfalls wird eine mehr oder minder starke Kirkendall-Porosität eintreten, die zu einem frühzeitigen Versagen des Schichtverbundes mit dem Grundwerkstoff führt. Dies haben entsprechend durchgeführte Modellrechnungen bestätigt. Experimentell wurde dieses Verhalten bestätigt, wie der Vergleich von niedrig und hoch chromhaltigen Schichten auf IN 738 LC beweist.

Andererseits ist bei der oberen Begrenzung des Chromgehaltes der Schicht zu berücksichtigen, dass bei niedrigen Chromgehalten von etwa 13 Gew.-% Chrom (Cr) in der Schicht an der Oberfläche häufig eine Spinellbildung mit "Multiple Cracking" auftritt, die ebenfalls zu einer verkürzten Lebensdauer des Schutzschichtsystems führt. Eine sehr ausgewogene Zusammensetzung der Schutzschicht führt zwar schon zu guten Ergebnissen, stellt jedoch noch nicht das Optimum dar.

Aus den oben genannten Gründen wurde eine Lösung gesucht, die alle Vorteile in sich vereinigt.

Die hier vorgeschlagene Lösung stellt eine Kombination von Schichtzusammensetzungen als Duplexschicht vor, die gegenüber bisherigen Schichtzusammensetzungen Verbesserungen im Hinblick auf die oben genannten Problematiken aufweist.

Die beschriebenen Aussagen werden in den Anlagen schematisch und als metallographische Bilder dargestellt.

Es wird eine Schutzschicht vorgeschlagen, die gegenüber den bisher verwendeten Schichten eine bessere Oxidationsbeständigkeit und gutes thermomechanisches Verhalten aufweist und aufgrund der Substitution von Rhenium deutliche Kostenvorteile besitzt. Darüber hinaus soll das Interdiffusionsverhalten gleich oder besser sein. Im Gegensatz zu üblichen Schichtzusammensetzungen weist die Oberlage der Duplexschicht Chromgehalte von > 20% Chrom, insbesondere > 22% Chrom (Cr) auf. Damit wird eine Spinellbildung und "Multiples Cracking" in der TGO vermieden. Der höhere Gehalt an Chrom (Cr) in der obersten Schichtlage hat zwei Gründe: Einerseits bleibt trotz Verdampfung von Chrom (Cr) bei der Lösungsglühbehandlung in der obersten Schichtlage genug Cr vorhanden um die Aktivität von Aluminium hoch zu halten und andererseits dient das Chrom als Keimbildner für stabiles alpha-Aluminiumoxid.

Die Unterlage (Grenzschicht zum Grundwerkstoff) der Duplexschicht weist hingegen einen deutlich geringeren Chromgehalt, Vorzugsweise von ca. 11 Gew.-% - 16 Gew.-% Chrom (Cr), auf. Dies verhindert eine lebensdauermindernde Kirkendall-Porosität an der Grenzfläche zum Grundwerkstoff.

Die anderen Bestandteile der Schichten basieren auf optimierten Anteilen von Nickel (Ni), Kobalt (Co), Aluminium (Al), Seltene Erden (Y, ...) u.a., jedoch kein Rhenium (Re).

Beispiel:
Duplex-Schutzschicht weist zumindest auf:
   eine untere NiCoCrAlY-Schichtunterlage (10):
   NiCoCrAlY-Schutzschicht mit der Zusammensetzung (in Gew.-%) von
   Ni- Gehalt: Rest
   Kobalt (Co): 22% - 26%, insbesondere 23% - 25%,
   Chrom (Cr): 11% -16%, insbesondere 13%,
   Aluminium (Al): 10,5% - 12,0%, insbesondere 11,5%,
   Yttrium (Y): 0,2% - 0,6%, insbesondere 0,3% bis 0,5%

Mittelhoher Co- Gehalt:
Verbreiterung des Beta/Gamma-Feldes, Vermeidung spröder Phasen

Mittlerer Cr-Gehalt:
Niedrig genug um spröde Phasen (Alpha- Chrom- oder Sigma-Phase) zu vermeiden und Kirkendall-Porosität zu vermeiden und dennoch die Schutzwirkung über lange Zeiten zu erhalten

Mittelhoher Al-Gehalt:
Ausreichend hoch um Al zum Erhalt einer stabilen TGO nachzuliefern. Niedrig genug um gute Duktilität zu erreichen und Versprödungsneigung zu vermeiden

Niedriger Y-Gehalt:
Ausreichend hoch um bei geringer Sauerstoffkontamination noch genügend Y-Aluminat zur Bildung von Y-haltigen "pegs" zu bilden
Niedrig genug um das Oxidschichtmachstum der Al₂O₃ Schicht negativ zu beschleunigen,

sowie eine obere NiCoCrAlY-Schicht (13):
NiCoCrAlY-Schutzschicht mit der Zusammensetzung (in Gew.-%) von Ni-Gehalt: Rest
Kobalt (Co): 22% - 26%, vorzugsweise 23% - 25%,
Chrom (Cr): 23% - 25%, vorzugsweise 24%,
Aluminium (Al): 10,5% - 12,0%, vorzugsweise 10,5%,
Yttrium (Y): 0,2% - 0,6%, vorzugsweise 0,3% - 0,5%

Hoher Cr-Gehalt:
Zur Vermeidung von Spinell und "Multiple Cracking" in der TGO und Verbesserung der Oxidschichtbildung aus Al₂O₃ mit geringen Oxidationsraten

Mittelhoher Al-Gehalt:
Der Al-Gehalt ist gegenüber der Unterlage leicht abgesenkt, um eine Verschlechterung der Duktilität durch den hohen Cr-Gehalt zu minimieren.

Die NiCoCrAlY-Schichten/Legierungen können auch weitere Elemente aufweisen, andere bzw. weitere Seltenerdelemente oder Ta, Ti, Fe..., aber kein Rhenium (Re).

Für die obere NiCoCrAlY-Schicht 13 wird keine Chromierung einer Einzelschicht durchgeführt, so dass auch deshalb kein Chromgradient vorliegt, weil ein einheitliches Pulver verwendet wird, um die Schicht aufzutragen.

Thermodynamische Phasenberechnungen sowie Versuchsergebnisse der jeweiligen Einzelschicht haben gezeigt, dass gute Ergebnisse hinsichtlich Oxidation, Ausbildung der TGO und der mechanischen Eigenschaften vorliegen.

Die Gesamtschichtdicke der metallischen Schicht 7 auf der Schaufel sollte vorzugsweise 180µm bis 300µm betragen.

Die untere Schicht 7 wird vorzugweise mit einem Feinpulver gespritzt und die obere Schicht 13 besteht aus dem hochchromhaltigen Pulver mit einer gröberen Pulverfraktion, um neben der verbesserten Oxidschichtausbildung auch die notwendige hohe Rauhigkeit von Rₐ = 9µm bis 14µm zur optimalen Haftung für eine keramische Schicht zu liefern.

Diese Vorgehensweise hat auch den Vorteil, dass kein neuer Kosten erhöhender Prozessschritt notwendig ist.

Es zeigen:
- Figur 1: Schichtsystem
- Figur 2: eine Turbinenschaufel
- Figur 3: eine Liste von Superlegierungen.

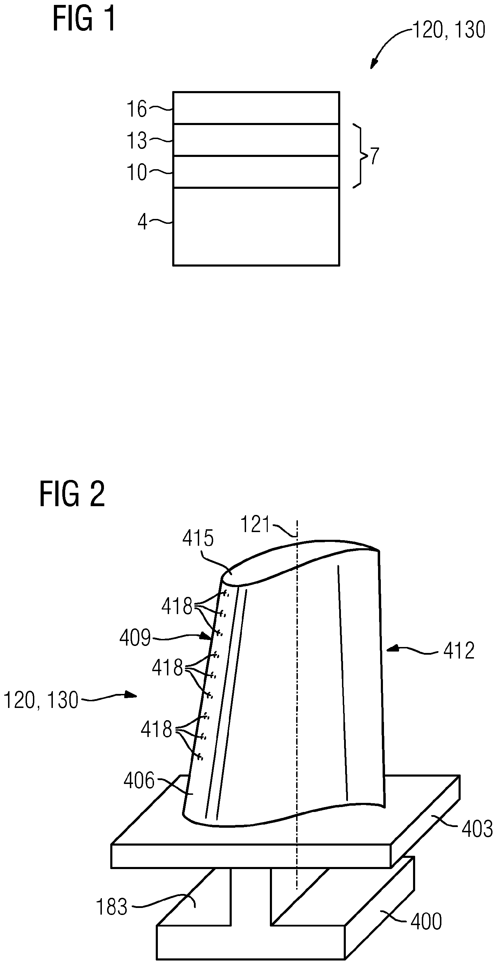

Figur 1 zeigt ein Schichtsystem aus einem Substrat 4 und der zweilagigen NiCoCrAlY-Schicht 7, die aus zwei verschiedenen Schichtzusammensetzungen 10, 13 zusammengesetzt ist.

Optional ist eine keramische Wärmedämmschicht 16 auf der äußeren NiCoCrAlY-Schicht 13.

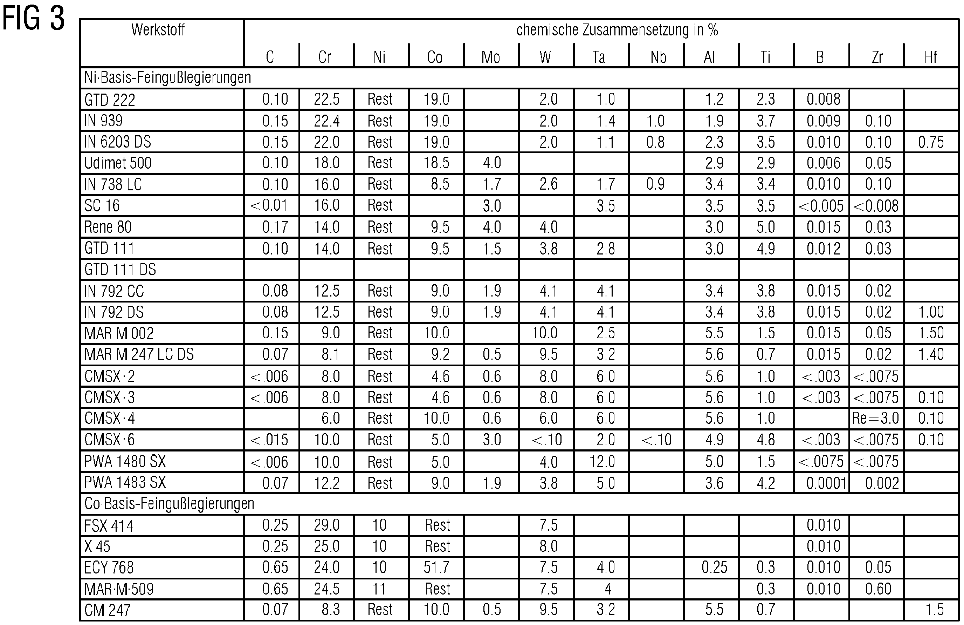

Als Substrat 4 können nickel- oder kobaltbasierte Superlegierungen, insbesondere Legierungen gemäß Figur 3 verwendet werden.

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Schichtsystem (1),
das zumindest aufweist:
ein Substrat (4),
eine zweilagige NiCoCrAlY-Schicht (7),
insbesondere eine nur zweilagige NiCoCrAlY-Schicht,
mit einer unteren NiCoCrAlY-Schicht (10),
bei dem der Gehalt von Chrom (Cr) der unteren Schicht (10) kleiner ist,
insbesondere mindestens 3 Gew.-% kleiner ist,
ganz insbesondere mindestens 5 Gew.-% kleiner ist,
als der Gehalt von Chrom (Cr) der äußeren NiCoCrAlY-Schicht (13).

2. Schichtsystem nach Anspruch 1,
bei dem der der Gehalt von Kobalt (Co) der unteren NiCoCrAlY-Schicht (10) gleich oder vergleichbar ist mit dem Gehalt von Kobalt (Co) der äußeren NiCoCrAlY-Schicht (13), insbesondere bei dem der Gehalt an Kobalt (Co) gleich ist, ganz insbesondere 22 Gew.-% bis 26 Gew.-% beträgt.

3. Schichtsystem nach einem oder beiden der Ansprüche 1 oder 2,
bei dem der Unterschied im Gehalt an Chrom (Cr) 3 Gew.-% bis 13 Gew.-%,
insbesondere mindestens 7 Gew.-%,
ganz insbesondere mindestens 11 Gew.-% beträgt.

4. Schichtsystem nach einem oder mehreren der Ansprüche 1 bis 3,
bei dem der Gehalt an Aluminium (Al) der unteren NiCoCrAlY-Schicht (10) gleich oder vergleichbar ist mit dem Gehalt von Aluminium (Al) der äußeren NiCoCrAlY-Schicht (13) insbesondere gleich ist,
ganz insbesondere 10,5 Gew.-% - 12,0 Gew.-% beträgt.

5. Schichtsystem nach einem oder mehreren der Ansprüche 1 bis 4,
bei dem der Gehalt an Yttrium (Y) der unteren NiCoCrAlY-Schicht (10) gleich oder vergleichbar ist mit dem Gehalt von Yttrium (Y) der äußeren NiCoCrAlY-Schicht (13) gleich ist,
insbesondere 0,2 Gew.-% bis 0,6 Gew.-% beträgt.

6. Schichtsystem nach einem oder mehreren der Ansprüche 1 bis 5,
bei dem die untere NiCoCrAlY-Schicht (10) folgende Zusammensetzung aufweist (in Gew.-%) :
Kobalt (Co): 22% - 26%,
insbesondere 23% - 25%,
Chrom (Cr): 11% - 16%,
insbesondere 13%,
Aluminium (Al): 10,5% - 12,0%,
insbesondere 11,5%,
Yttrium (Y): 0,2% - 0,6% ,
insbesondere 0,3% - 0,5%,
Nickel,
insbesondere daraus besteht.

7. Schichtsystem nach einem oder mehreren der Ansprüche 1 bis 6,
bei dem die obere NiCoCrAlY-Schicht (13) folgende Zusammensetzung aufweist(in Gew.-%):
Kobalt (Co): 22% - 26%,
insbesondere 23% - 25%,
Chrom (Cr): 23% - 25%,
insbesondere 24%,
Aluminium (Al): 10,5% - 12,0%,
insbesondere 10,5%,
Yttrium (Y): 0,2% - 0,6%,
insbesondere 0,3% - 0,5%,
Nickel,
insbesondere daraus besteht.

8. Schichtsystem nach einem oder mehreren der Ansprüche 1 bis 7,
die keinen Gradienten in dem Gehalt an Chrom (Cr) in der Schicht (7),
insbesondere nicht in der äußeren NiCoCrAlY-Schicht (13) aufweist,
ganz insbesondere nicht chromiert ist.

9. Schichtsystem nach einem oder mehreren der vorhergehenden Ansprüche 1 bis 8,
bei dem eine thermisch gewachsene Oxidschicht auf der äußeren NiCoCrAlY-Schicht (13) gebildet wird oder vorhanden ist.

10. Schichtsystem nach einem oder mehreren der vorhergehenden Ansprüche 1 bis 9,
bei dem eine äußere keramische Schicht auf der zweilagigen NiCoCrAlY-Schicht (7) aufgebracht ist.

11. Schichtsystem nach einem oder mehreren der Ansprüche 1 bis 10,
bei dem die NiCoCrAlY-Schicht (7) eine Dicke von 180µm bis 300µm aufweist.

12. Schichtsystem nach einem oder mehreren der vorhergehenden Ansprüche,
bei dem die verwendeten Pulver für die obere NiCoCrAlY-Schicht (13) gröber,
insbesondere 20% gröber ist als die Körnung der Pulver für die untere NiCoCrAlY-Schicht (10),
so dass die obere Schicht (13) größere Körner aufweist als die untere Schicht (10),
so dass insbesondere eine Rauhigkeit von Rₐ = 9µm bis 14µm erzielt wird.

13. Schichtsystem nach einem oder mehreren der vorhergehenden Ansprüche,
die kein Rhenium (Re) in den Schichten (7, 10, 13) aufweist.

14. Legierung,
die aufweist (in Gew.-%):
Kobalt (Co): 22% - 26%,
insbesondere 23% - 25%,
Chrom (Cr): 23% - 25%,
insbesondere 24%,
Aluminium (Al): 10,5% - 12,0%,
insbesondere 10,5%,
Yttrium (Y): 0,2% - 0,6%,
insbesondere 0,3% - 0,5%,
Nickel,
insbesondere daraus besteht.
